# EUROPÄISCHE PATENTSCHRIFT

(11) **EP 4 574 623 B1**
(45) Veröffentlichungstag und Bekanntmachung des Hinweises auf die Patenterteilung: **29.07.2026**
(21) Anmeldenummer: 24213242.1
(22) Anmeldetag: 15.11.2024
(51) Int. Cl.: B61L 15/00, B61L 25/02, B60T 8/32, B60T 17/22, B61D 19/02, B61H 11/00, B60T 13/66

(54) **VERFAHREN UND FAHRZEUGSTEUERSYSTEM ZUM BETREIBEN EINES SCHIENENFAHRZEUGS**
METHOD AND VEHICLE CONTROL SYSTEM FOR OPERATING A RAIL VEHICLE
PROCÉDÉ ET SYSTÈME DE COMMANDE DE VÉHICULE POUR FAIRE FONCTIONNER UN VÉHICULE FERROVIAIRE

(30) Priorität: 21.12.2023 DE 102023213222
(43) Veröffentlichungstag der Anmeldung: 25.06.2025
(73) Patentinhaber: Siemens Mobility GmbH, 80997 München (DE)
(72) Erfinder: Wiesand, Manfred, 90559 Burgthann (DE)
(74) Vertreter: Siemens Patent Attorneys

(56) Entgegenhaltungen:
- EP-A1- 3 744 605
- WO-A1-2014/041626
- CA-A- 1 143 819
- CN-A- 112 776 775
- JP-B2- 4 822 500
- ANONYMOUS: "ATO-OB / Vehicle Interface Specification FIS", UNSING, no. 0.0.9, 1 July 2018 (2018-07-01), pages 1 - 14, XP093135697

## Beschreibung

Die Erfindung bezieht sich auf ein Verfahren zum Betreiben eines Schienenfahrzeugs, wobei bei dem Verfahren im Falle eines Fahrzeughalts, bei dem zumindest eine Fahrzeugtür geöffnet worden ist, das Schienenfahrzeug mit einer vorgegebenen Sollbremskraft gebremst wird, vor einem Wiederanfahren des Schienenfahrzeugs ein Türschließsignal erzeugt wird, das ein Schließen aller geöffneten Fahrzeugtüren auslöst oder ein bevorstehendes Schließen ankündigt, das vollständige Schließen der Fahrzeugtüren überwacht wird und ein Wiederanfahren frühestens nach dem Vorliegen einer Bestätigung, dass alle Fahrzeugtüren geschlossen sind, erfolgt. Derartige Verfahren sind im Bereich des Personennahverkehrs, beispielsweise bei U- und S-Bahnen, allgemein bekannt.

Auch ist bekannt, dass die Lösezeit der Fahrzeugbremsen ein Wiederanfahren verzögern kann. So wird beispielsweise in der deutschen Patentschrift DE 10 2020 115 000 B4 erläutert, dass zunächst die pneumatischen Bremsen gelöst werden müssen, bevor die Traktion durch die Fahrmotoren aufgeschaltet werden soll. Um die Lösezeit der Pneumatik zu verkleinern, also den Bremsdruck aus den Bremszylindern möglichst schnell abzubauen und damit ein Anfahren des Schienenfahrzeugs möglichst zügig zu ermöglichen, ist bei dem Verfahren gemäß der genannten Patentschrift vorgesehen, Gleitschutzventile nicht nur im Sinne eines Gleitschutzes während der Fahrt zu nutzen, sondern auch zum Lösen der pneumatischen Bremsen vor einem Wiederanfahren des Schienenfahrzeugs. Mit anderen Worten soll der Bremsdruck der Bremszylinder durch den zusätzlichen Einsatz der Gleitschutzventile beschleunigt abgebaut werden, um das Freigabesignal für die Motorsteuerung möglichst zügig zu erhalten.

Die Offenlegungsschrift WO 2014/041626 A1 offenbart ein System zum Öffnen und Schließen von Zugtüren an einer Haltestelle, bei dem sichergestellt wird, dass alle Türen ordnungsgemäß geschlossen sind, bevor der Abfahrtsvorgang beginnen kann.

Der Erfindung liegt die Aufgabe zugrunde, bei einem Verfahren der eingangs angegebenen Art nach einem Halt an einer Haltestelle wie zum Beispiel einem Bahnhof ein besonders schnelles Wiederanfahren zu ermöglichen.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass vor, bei oder nach Erzeugung des Türschließsignals und noch vor Vorliegen der Bestätigung, dass alle Fahrzeugtüren geschlossen sind, die auf das Schienenfahrzeug wirkende Bremskraft reduziert wird, vor oder spätestens bei der Reduktion der Bremskraft eine Wegrollüberwachung begonnen wird, und während aktivierter Wegrollüberwachung die Bremskraft wieder auf die Sollbremskraft erhöht wird, falls die Wegrollüberwachung ein Wegrollen des Schienenfahrzeugs feststellt, und andernfalls die reduzierte Bremskraft beibehalten wird, wobei die Wegrollüberwachung zumindest so lange durchgeführt wird, bis die Bestätigung, dass alle Fahrzeugtüren geschlossen sind, vorliegt.

Ein wesentlicher Vorteil des erfindungsgemäßen Verfahrens besteht darin, dass Maßnahmen zum Lösen der Bremsen bereits vor oder beim Türschließen eingeleitet werden, sodass zum Zeitpunkt, an dem alle Fahrzeugtüren geschlossen sind, die Bremsen bereits vollständig oder zumindest fast vollständig gelöst sein können und das Schienenfahrzeug anfahren kann. Die erfinderische Idee basiert also auf dem Gedanken, die aus Fahrplansicht verlorene Totzeit zwischen dem Erzeugen des Türschließsignals und dem tatsächlichen Anfahrzeitpunkt zu nutzen, indem in dieser Totzeit bereits mit dem Lösen der Bremsen begonnen wird. Eine Gefährdung durch ein etwaiges Wegrollen des Schienenfahrzeugs vor einem vollständigen Schließen der Türen wird durch die erfindungsgemäß vorgesehene Wegrollüberwachung verhindert. Die Erfindung geht von dem Gedanken aus, dass im Allgemeinen ein Wegrollen während eines Halts an einem Bahnhof eher unwahrscheinlich ist und ein Eingriff durch das Sicherheitsnetz der Wegrollüberwachung nur selten oder nie nötig ist; in den meisten Fällen kann daher die Bremse bereits während des Türschließvorgangs gelöst oder fast gelöst werden, wodurch im Idealfall ein Anfahren verzögerungsfrei oder allenfalls mit nur minimaler Verzögerung ermöglicht wird.

Als das Türschließsignal kann ein Ankündigungssignal herangezogen werden, das eine bevorstehende Türschließung ankündigt; in diesem Falle kann mit dem Lösen der Bremse bereits begonnen werden, noch bevor tatsächlich das Schließen der Türen beginnt.

Alternativ kann als das Türschließsignal ein Türsteuersignal angesehen werden, das eine mechanische Türverstellung tatsächlich auslöst; in diesem Falle wird mit dem Lösen der Bremse erst begonnen, wenn das Schließen der Türen beginnt.

Die Wegrollüberwachung lässt sich besonders einfach und damit vorteilhaft durchführen, wenn diese eine Überwachung der Raddrehzahl zumindest eines der Räder des Schienenfahrzeugs einschließt.

Mit Blick auf einen minimalen Steueraufwand wird es als vorteilhaft angesehen, wenn die reduzierte Bremskraft oder die wieder auf die Sollbremskraft erhöhte Bremskraft beibehalten wird, bis das Anfahren erfolgt bzw. ein das Anfahren befehlender Anfahrbefehl umgesetzt wird.

Die Wegrollüberwachung wird aus Sicherheitsgründen vorzugsweise erst beendet, wenn das Anfahren erfolgt bzw. ein das Anfahren befehlender Anfahrbefehl umgesetzt wird.

Um zu verhindern, dass das Schienenfahrzeug unerwünscht mit geschlossenen Türen wegrollt, wird es als vorteilhaft angesehen, wenn die Bremskraft wieder auf die Sollbremskraft erhöht wird, wenn innerhalb einer vorgegebenen Anfahrzeitspanne nach Vorliegen der Bestätigung, dass alle Fahrzeugtüren geschlossen sind, kein Anfahren erfolgt.

Im Allgemeinen ist das Gefälle im Bereich von Haltestellen oder Bahnhöfen gering, sodass die Reduktion der Bremskraft vorzugsweise stets auf eine Bremskraft von Null oder eine Bremskraft von weniger als 20 % der Sollbremskraft erfolgt.

Alternativ kann vorgesehen sein, dass die Reduktion der Bremskraft vom Gefälle an der jeweiligen Haltestelle abhängig gewählt wird, wobei die Reduktion der Bremskraft umso kleiner gewählt wird, je größer das Gefälle an der Haltestelle ist.

Der Anfahrbefehl wird vorzugsweise bei Vorliegen der Bestätigung, dass alle Fahrzeugtüren geschlossen sind, automatisch erzeugt.

Die Erfindung bezieht sich außerdem auf ein Fahrzeugsteuersystem für ein Schienenfahrzeug, das ausgestattet ist mit einer Bremssteuereinrichtung, die im Falle eines Fahrzeughalts, bei dem zumindest eine Fahrzeugtür geöffnet ist, ein Bremsen des Schienenfahrzeugs mit einer vorgegebenen Sollbremskraft veranlasst, einer Türsteuereinrichtung, die vor einem Wiederanfahren des Schienenfahrzeugs nach dem Fahrzeughalt ein Türschließsignal erzeugt, das ein Schließen aller geöffneten Fahrzeugtüren auslöst oder ein bevorstehendes Schließen ankündigt, einer Türüberwachungseinrichtung, die das vollständige Schließen der Fahrzeugtüren überwacht, und einer Antriebssteuereinrichtung, die einen das Wiederanfahren auslösenden Anfahrbefehl frühestens nach dem Vorliegen einer Bestätigung, dass alle Fahrzeugtüren geschlossen sind, erzeugt oder umsetzt.

Erfindungsgemäß ist bezüglich eines solchen Fahrzeugsteuersystems vorgesehen, dass die Bremssteuereinrichtung dazu ausgestaltet ist, vor, bei oder nach einer Erzeugung des Türschließsignals und noch vor Vorliegen der Bestätigung, dass alle Fahrzeugtüren geschlossen sind, die auf das Schienenfahrzeug wirkende Bremskraft zu reduzieren, eine Wegrollüberwachungseinrichtung vorhanden ist, die vor oder spätestens zeitgleich mit der Reduktion der Bremskraft eine Wegrollüberwachung beginnt, die sie zumindest so lange durchführt, bis die Bestätigung, dass alle Fahrzeugtüren geschlossen sind, vorliegt, und die Bremssteuereinrichtung außerdem dazu ausgestaltet ist, während aktivierter Wegrollüberwachung die Bremskraft wieder auf die Sollbremskraft zu erhöhen, falls die Wegrollüberwachungseinrichtung ein Wegrollen des Schienenfahrzeugs feststellt, und andernfalls die reduzierte Bremskraft beizubehalten.

Bezüglich der Vorteile des erfindungsgemäßen Fahrzeugsteuersystems und vorteilhafter Ausgestaltungen des erfindungsgemäßen Fahrzeugsteuersystems sei auf die obigen Erläuterungen im Zusammenhang mit dem erfindungsgemäßen Verfahren und dessen vorteilhafter Ausgestaltungen verwiesen.

Als vorteilhaft wird es angesehen, wenn die Wegrollüberwachungseinrichtung zwei oder mehr Wegrollüberwachungsmodule umfasst, das Fahrzeugsteuersystem zwei oder mehr Bremssteuergeräte umfasst, und in jedem der Bremssteuergeräte jeweils eines der Wegrollüberwachungsmodule der Wegrollüberwachungseinrichtung integriert ist. Bei der letztgenannten Ausführungsform wird die Funktionalität der Wegrollüberwachung ganz oder zumindest zum Teil auf die Bremssteuergeräte verteilt.

Die Wegrollüberwachungseinrichtung schließt vorzugsweise auf ein Wegrollen, wenn zumindest eines der Wegrollüberwachungsmodule ein Wegrollen signalisiert.

Die Bremssteuereinrichtung und/oder die Türsteuereinrichtung und/oder die Überwachungseinrichtung und/oder die Antriebssteuereinrichtung und/oder die Wegrollüberwachungseinrichtung bzw. deren Wegrollüberwachungsmodule werden vorzugsweise jeweils durch ein oder mehr Softwaremodule gebildet.

Die Erfindung bezieht sich außerdem auf ein Schienenfahrzeug, das mit einem Fahrzeugsteuersystem wie oben beschrieben ausgestattet ist.

Die Erfindung wird nachfolgend anhand von Ausführungsbeispielen näher erläutert; dabei zeigen beispielhaft:
- Figur 1: ein Ausführungsbeispiel für ein erfindungsgemäßes Schienenfahrzeug und ein Ausführungsbeispiel für ein erfindungsgemäßes Fahrzeugsteuersystem, anhand dessen Ausführungsbeispiele für erfindungsgemäße Verfahren erläutert werden,
- Fig. 2-6: verschiedene Betriebsszenarien, die bei dem Fahrzeugsteuersystem gemäß Figur 1 auftreten können und anhand derer weitere Ausführungsbeispiele erfindungsgemäßer Verfahren beschrieben werden, und
- Figur 7: ein Ausführungsbeispiel für ein weiteres erfindungsgemäßes Schienenfahrzeug und ein weiteres Ausführungsbeispiel für ein erfindungsgemäßes Fahrzeugsteuersystem.

In den Figuren werden der Übersicht halber für identische oder vergleichbare Komponenten stets dieselben Bezugszeichen verwendet.

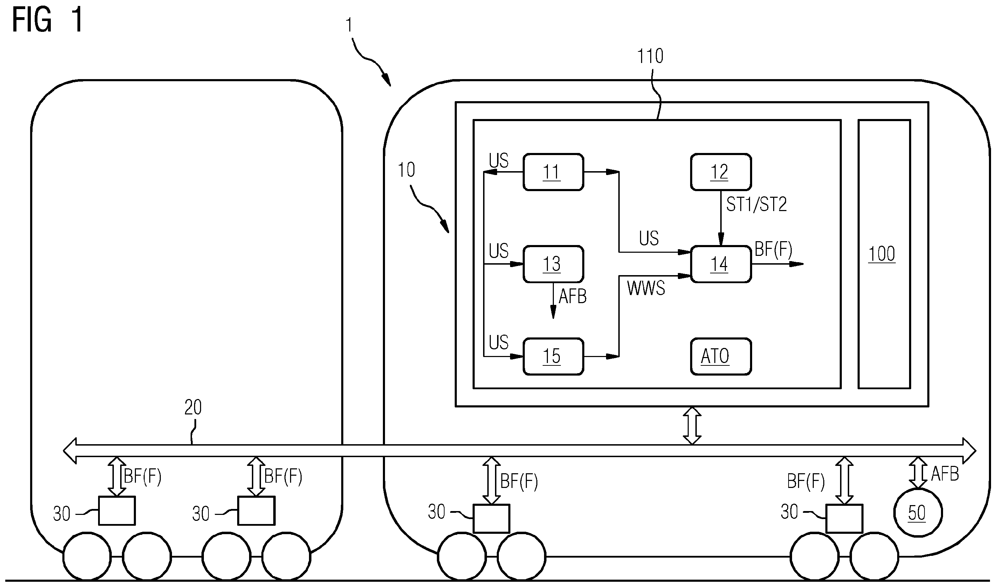

Die Figur 1 zeigt Bestandteile eines Ausführungsbeispiels für ein erfindungsgemäßes Schienenfahrzeug 1, das mit einem Ausführungsbespiel für ein erfindungsgemäßes Fahrzeugsteuersystem 10 ausgerüstet ist.

Das Fahrzeugsteuersystem 10 umfasst eine Recheneinrichtung 100 und einen Speicher 110, in dem eine Vielzahl an Softwaremodulen abgespeichert sind. Das Fahrzeugsteuersystem 10 steht über eine Datenübertragungseinrichtung, bei der es sich beispielsweise um einen fahrzeuginternen Datenbus 20 handeln kann, mit einer Vielzahl an Bremssteuergeräten 30 in Verbindung, die jeweils zugeordnete ein- oder mehrachsige Fahrgestelle des Schienenfahrzeugs 1 durch Ansteuerung nicht weiter dargestellter Bremsen bremsen können. Bei den Bremsen kann es sich beispielsweise um pneumatische Bremsen handeln, die durch Druckbeaufschlagung mit Druckluft aktiviert bzw. in ihrer Bremskraft F erhöht und durch Druckreduktion bzw. Belüftung deaktiviert bzw. in ihrer Bremskraft F reduziert werden können.

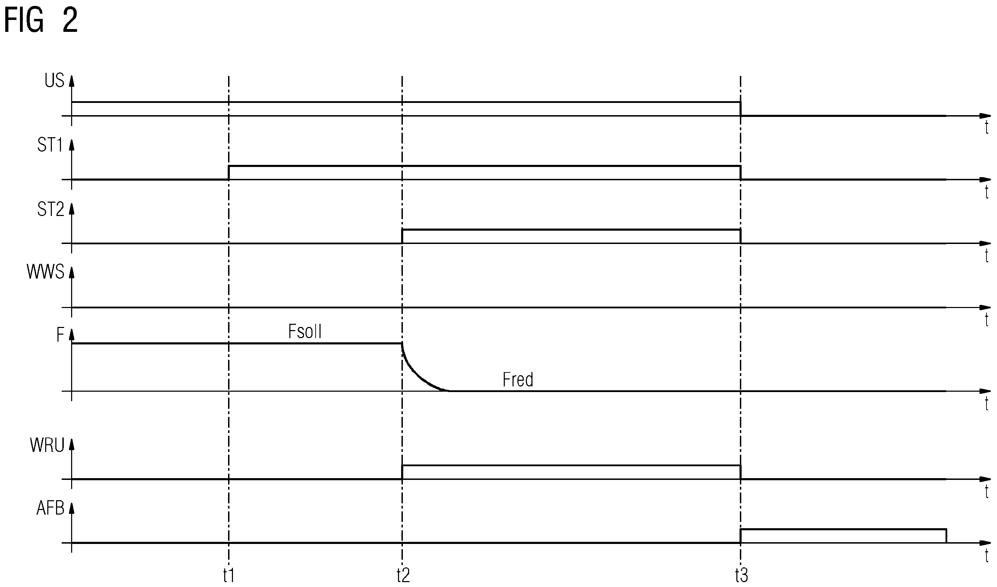

Bei einem der Softwaremodule handelt es sich bei dem Ausführungsbeispiel gemäß Figur 1 um ein Türüberwachungsmodul 11, das bei Ausführung durch die Recheneinrichtung 100 eine Türüberwachungseinrichtung bildet. Die Türüberwachungseinrichtung bzw. das Türüberwachungsmodul 11 sind dazu ausgestaltet, den Öffnungszustand und ggf. den Verriegelungszustand der Türen des Schienenfahrzeugs 1 und damit das vollständige Schließen der Fahrzeugtüren zu überwachen und ein entsprechendes Überwachungssignal US auszugeben, das die Türen als vollständig geschlossen oder nicht vollständig geschlossen anzeigt. In den Figuren 2 bis 6 wird durch eine logische Null der geschlossene Zustand aller Türen und durch eine logische Eins der nichtgeschlossene Zustand zumindest einer der Türen angezeigt.

Das Türüberwachungsmodul 11 verarbeitet zu diesem Zweck Sensorsignale von Türschließkontakten oder Türsensoren, die aus Gründen der Übersicht in der Figur 1 nicht gezeigt sind.

Bei einem anderen der Softwaremodule handelt es sich bei dem Ausführungsbeispiel gemäß Figur 1 um ein Türsteuermodul 12, das bei Ausführung durch die Recheneinrichtung 100 eine Türsteuereinrichtung bildet. Die Türsteuereinrichtung bzw. das Türsteuermodul 12 sind dazu ausgestaltet, vor einem Wiederanfahren des Schienenfahrzeugs 1 nach einem Fahrzeughalt mit geöffneter Tür das Schließen aller Türen zu veranlassen. Zu diesem Zweck erzeugt das Türsteuermodul 12 zunächst ein Ankündigungssignal ST1, das eine bevorstehende Türschließung ankündigt und Passagiere vor dem Schließvorgang warnt, und anschließend ein Türsteuersignal ST2, das eine mechanische Türschließung tatsächlich auslöst.

Ein solches Türsteuersignal ST2 zum Auslösen des Schließens aller Fahrzeugtüren wird bei dem Ausführungsbeispiel gemäß Figur 1 zu nicht weiter gezeigten Türschließeinrichtungen des Schienenfahrzeugs 1 übermittelt, wodurch diese veranlasst werden, die ihnen zugeordneten Türen zu schließen.

Das Türsteuermodul 12 kann das Schließen der Türen veranlassen, wenn es dazu extern aufgefordert wird, beispielsweise von einem Fahrzeugführer oder im Falle eines autark fahrenden Schienenfahrzeugs 1 von einem ATO-Steuersystem, das in Form eines ATO-Moduls ATO ebenfalls in dem Speicher 110 abgespeichert sein kann. Auch kann vorgesehen sein, dass das Türsteuermodul 12 das Schließen der Türen selbsttätig auf der Basis eines vorgegebenen Fahrplans veranlasst, der ebenfalls in dem Speicher 110 abgespeichert sein kann.

Bei einem anderen der Softwaremodule handelt es sich bei dem Ausführungsbeispiel gemäß Figur 1 um ein Antriebssteuermodul 13, das bei Ausführung durch die Recheneinrichtung 100 eine Antriebssteuereinrichtung bildet. Die Antriebssteuereinrichtung bzw. das Antriebssteuermodul 13 sind dazu ausgestaltet, einen das Wiederanfahren auslösenden Anfahrbefehl AFB, der von dem Fahrzeugführer oder dem ATO-Steuersystem im Falle eines autonom fahrenden Schienenfahrzeugs 1 stammen kann, frühestens nach dem Vorliegen einer Bestätigung, dass alle Fahrzeugtüren geschlossen sind, an einen Antrieb 50 des Schienenfahrzeugs 1 weiterzuleiten und dadurch umzusetzen. Das Weiterleiten des Anfahrbefehls AFB kann mit Erhalt der Bestätigung oder um eine vorgegebene Zeitspanne verzögert erfolgen. In den Figuren 2 bis 6 wird die Umsetzung des Anfahrbefehls AFB und damit das tatsächliche Anfahren des Schienenfahrzeugs 1 nach dem Fahrzeughalt durch den Signalwechsel von einer logischen Null auf eine logische Eins dargestellt.

Eine Bestätigung, dass alle Türen geschlossen sind, erzeugt das oben beschriebene Türüberwachungsmodul 11, indem es nach dem vollständigen Schließen aller Fahrzeugtüren das entsprechende Überwachungssignal US mit einer logischen Null ausgibt. Aus diesem Grunde steht bei dem Ausführungsbeispiel gemäß Figur 1 das Türüberwachungsmodul 11 mit dem Antriebssteuermodul 13 in Verbindung, sodass das Antriebssteuermodul 13 von dem Türüberwachungsmodul 11 die Freigabe zum Anfahren in Form des Überwachungssignals US erhalten kann.

Bei einem anderen der Softwaremodule handelt es sich bei dem Ausführungsbeispiel gemäß Figur 1 um ein Bremssteuermodul 14, das bei Ausführung durch die Recheneinrichtung 100 eine Bremssteuereinrichtung bildet.

Die Bremssteuereinrichtung bzw. das Bremssteuermodul 14 veranlassen im Falle eines Fahrzeughalts, bei dem zumindest eine Fahrzeugtür geöffnet ist, ein Bremsen des Schienenfahrzeugs 1 mit einer vorgegebenen Sollbremskraft Fsoll. Ein solches Veranlassen der Sollbremskraft Fsoll wird bei dem Ausführungsbeispiel gemäß Figur 1 durch die Ausgabe eines die gewünschte Bremskraft F definierenden Bremskraftsteuerbefehls BF realisiert, der zu den Bremssteuergeräten 30 des Schienenfahrzeugs 1 übermittelt wird und diese auffordert, ihnen zugeordnete und aus Gründen der Übersicht in der Figur 1 nicht gezeigte Bremseinheiten, bei denen es sich beispielsweise um pneumatische Bremseinheiten handeln kann, entsprechend zu aktivieren.

Die Bremssteuereinrichtung bzw. das Bremssteuermodul 14 dienen außerdem dazu, vor, bei oder nach einer Erzeugung eines Türschließsignals und noch vor Vorliegen der Bestätigung, dass alle Fahrzeugtüren geschlossen sind, die auf das Schienenfahrzeug 1 wirkende Bremskraft F zu reduzieren. Als das Türschließsignal kann bereits das Ankündigungssignal ST1, das die bevorstehende Türschließung ankündigt und Passagiere vor dem Schließvorgang warnt, oder das Türsteuersignal ST2, das die mechanische Türschließung tatsächlich auslöst, angesehen werden.

Die Bremssteuereinrichtung bzw. das Bremssteuermodul 14 hat also mit anderen Worten außerdem die Funktion, das Wiederanfahren des Schienenfahrzeugs 1 nach einem Fahrzeughalt, bei dem zumindest eine Tür geöffnet war, zu beschleunigen, indem es als vorbereitende Handlung die Bremskraft F reduziert. Im Falle von pneumatischen Bremsen erfolgt das Reduzieren der Bremskraft F durch einen Druckabbau in den Bremszylindern der Bremsen beispielsweise durch das Öffnen entsprechender Ventile.

Vor der Erzeugung des Türschließsignals kann die Bremssteuereinrichtung bzw. das Bremssteuermodul 14 die Reduktion der Bremskraft F beispielsweise veranlassen, wenn es dazu extern aufgefordert wird, zum Beispiel von dem Fahrzeugführer oder im Falle eines autark fahrenden Schienenfahrzeugs 1 von dem ATO-Steuersystem. Auch kann vorgesehen sein, dass das Bremssteuermodul 14 die Reduktion der Bremskraft F selbsttätig auf der Basis des bereits erwähnten Fahrplans veranlasst, der in dem Speicher 110 abgespeichert sein kann.

Wenn die Bremssteuereinrichtung bzw. das Bremssteuermodul 14 die Reduktion der Bremskraft F erst bei oder nach der Erzeugung des Türschließsignals veranlassen soll, so kann sie das Türschließsignal als Triggersignal verwenden und die Bremskraft F reduzieren, sobald das Triggersignal erzeugt worden ist oder um eine vorgegebene Verzögerungszeit verzögert. Um eine solche Triggerung durch das Türschließsignal zu ermöglichen, werden bei dem Ausführungsbeispiel gemäß Figur 1 das Ankündigungssignal ST1, das die bevorstehende Türschließung ankündigt und Passagiere vor dem Schließvorgang warnt, und das Türsteuersignal ST2, das die mechanische Türschließung tatsächlich auslöst, jeweils auch zu dem Bremssteuermodul 14 übertragen.

Bei einem anderen der Softwaremodule handelt es sich bei dem Ausführungsbeispiel gemäß Figur 1 um ein Wegrollüberwachungsmodul 15, das bei Ausführung durch die Recheneinrichtung 100 eine Wegrollüberwachungseinrichtung bildet. Die Wegrollüberwachungseinrichtung bzw. das Wegrollüberwachungsmodul 15 sind dazu ausgebildet, im Falle eines Fahrzeughalts mit geöffneten Türen vor oder spätestens zeitgleich mit der Reduktion der Bremskraft F durch das Bremssteuermodul 14 eine Wegrollüberwachung WRU zu beginnen, wie in den Figuren 2-6 durch einen Signalwechsel von einer logischen Null zu einer logischen Eins dargestellt ist. Die Wegrollüberwachung WRU wird zumindest so lange durchgeführt, bis die Bestätigung, dass alle Fahrzeugtüren geschlossen sind, vorliegt. Das Beenden der Wegrollüberwachung ist in den Figuren 2-6 durch einen Signalwechsel von einer logischen Eins zu einer logischen Null dargestellt.

Eine solche Bestätigung, dass alle Türen geschlossen sind, erzeugt - wie bereits erwähnt - das oben beschriebene Türüberwachungsmodul 11. Aus diesem Grunde steht bei dem Ausführungsbeispiel gemäß Figur 1 das Türüberwachungsmodul 11 auch mit dem Wegrollüberwachungsmodul 15 in Verbindung und sendet an dieses das Überwachungssignal US, sodass das Wegrollüberwachungsmodul 15 von dem Türüberwachungsmodul 11 mit der Information versorgt wird, wie lange die Wegrollüberwachung WRU mindestens aufrechterhalten werden soll.

Falls die Wegrollüberwachungseinrichtung bzw. das Wegrollüberwachungsmodul 15 ein Wegrollen des Schienenfahrzeugs 1 feststellt, erzeugt sie bzw. es ein Wegrollwarnsignal WWS. Das Wegrollwarnsignal WWS wird zu dem Bremssteuermodul 14 übermittelt, das bei Vorliegen des Wegrollwarnsignals WWS die Bremskraft F wieder auf die Sollbremskraft Fsoll erhöht.

Solange kein Wegrollwarnsignal WWS vorliegt, behält die Bremssteuereinrichtung bzw. das Bremssteuermodul 14 die reduzierte Bremskraft F vorzugsweise bei.

Der reduzierte Bremskraftwert Fred, auf den das Bremssteuermodul 14 die Bremskraft F reduziert, kann Null betragen, da die Wegrollüberwachungseinrichtung bzw. das Wegrollüberwachungsmodul 15 vor einem Wegrollen durch die Ausgabe des Wegrollwarnsignal WWS warnt. Alternativ kann das Bremssteuermodul 14 die Reduktion der Bremskraft F vom Gefälle an der Haltestelle abhängig wählen, wobei sie die Reduktion der Bremskraft F umso kleiner wählt, je größer das Gefälle an der Haltestelle ist. Zu diesem Zweck kann in dem Speicher **110** beispielsweise zu jedem fahrplanmäßig vorgesehenen Halt mit fahrplanmäßig vorgesehener Türöffnung jeweils das Gefälle vor Ort und/oder die zu dem jeweiligen Gefälle passende reduzierte Bremskraft F, mit der sich ein Wegrollen vermeiden lässt, in dem Speicher 110 abgespeichert sein.

Die Figur 2 zeigt die Zeitverläufe des Überwachungssignals US, des Ankündigungssignals ST1, des Türsteuersignals ST2, der Bremskraft F, des Betriebszustands des Wegrollüberwachungsmoduls 15, des Wegrollwarnsignals WWS und des Anfahrens bzw. des Weiterleitens eines Anfahrbefehls AFB an einen Antrieb 50 des Schienenfahrzeugs 1 über der Zeit t für ein erstes beispielhaftes Betriebsszenario.

In der Figur 2 wird beispielhaft davon ausgegangen, dass das Schienenfahrzeug 1 an einer Haltestelle, beispielsweise einem Bahnhof steht und die Türen oder zumindest eine der Türen geöffnet sind. Demgemäß erkennt das Türüberwachungsmodul 11 den geöffneten Zustand und erzeugt ein Überwachungssignal US mit einer logischen Eins, und das Bremssteuermodul 14 steuert mittels des Bremskraftsteuerbefehls BF die Bremssteuergeräte 30 derart an, dass die Bremsen eine Bremskraft F erzeugen, die einer vorgegebenen Sollbremskraft Fsoll entspricht.

Zu einem Zeitpunkt t1 erzeugt das Türsteuermodul 12 ein Ankündigungssignal ST1, mit dem das bevorstehende Schließen der Türen des Schienenfahrzeugs 1 angekündigt wird. Das Ankündigungssignal ST1 kann akustisch beispielsweise in Form eines Warntons und/oder in Form eines Warnlichts ausgegeben werden.

Zeitlich kurz danach zu einem Zeitpunkt t2 erzeugt das Türsteuermodul 12 das Türsteuersignal ST2, das die mechanische Türschließung tatsächlich auslöst. Das Ankündigungssignal ST1 wird vorzugsweise so lange weiter erzeugt, bis das Schließen der Türen zum Zeitpunkt t3 vollständig abgeschlossen ist. Zum Zeitpunkt t3 erkennt das Türüberwachungsmodul 11, dass die Türen geschlossen sind, und weist dem Überwachungssignal US eine logische Null zu.

Bei dem Ausführungsbeispiel gemäß Figur 2 wird davon ausgegangen, dass das Bremssteuermodul 14 einen Bremskraftsteuerbefehl BF (siehe Figur 1), durch den die Reduktion der Bremskraft F auf einen reduzierten Bremskraftwert Fred von beispielsweise Null veranlasst wird, in Reaktion auf das Türsteuersignal ST2 erzeugt. Das Abfallen der Bremskraft F beginnt also, obwohl die Türen noch nicht vollständig geschlossen worden sind und obwohl das Überwachungssignal US noch eine logische Eins aufweist.

Im Idealfall ist die Bremskraft F auf das gewünschte reduzierte Maß, beispielsweise auf Null, spätestens dann reduziert, wenn das Überwachungssignal US seinen Signalwechsel auf eine logische Null vollzieht bzw. alle Türen geschlossen sind, damit das Schienenfahrzeug 1 unmittelbar nach dem Schließen der Bremsen anfahren kann.

Das Wegrollüberwachungsmodul 15 beginnt die Wegrollüberwachung WRU (siehe Signalwechsel von logisch Null auf logisch Eins) bei dem Betriebsszenario gemäß Figur 2 zeitgleich mit der Reduktion der Bremskraft F bzw. in Reaktion auf den Bremskraftsteuerbefehl BF, durch den die Bremskraft F reduziert wird, und hält die Wegrollüberwachung WRU vorzugsweise mindestens so lange aufrecht, bis alle Türen geschlossen sind und das Überwachungssignal US auf logisch Null wechselt und/oder der Anfahrbefehl AFB für den Antrieb 50 tatsächlich vorliegt und umgesetzt wird.

Bei dem Betriebsszenario gemäß Figur 2 wird beispielhaft davon ausgegangen, dass während der Phase reduzierter Bremskraft F kein Wegrollen des Schienenfahrzeugs 1 auftritt und das Wegrollüberwachungsmodul 15 demgemäß auch kein Wegrollwarnsignal WWS erzeugt.

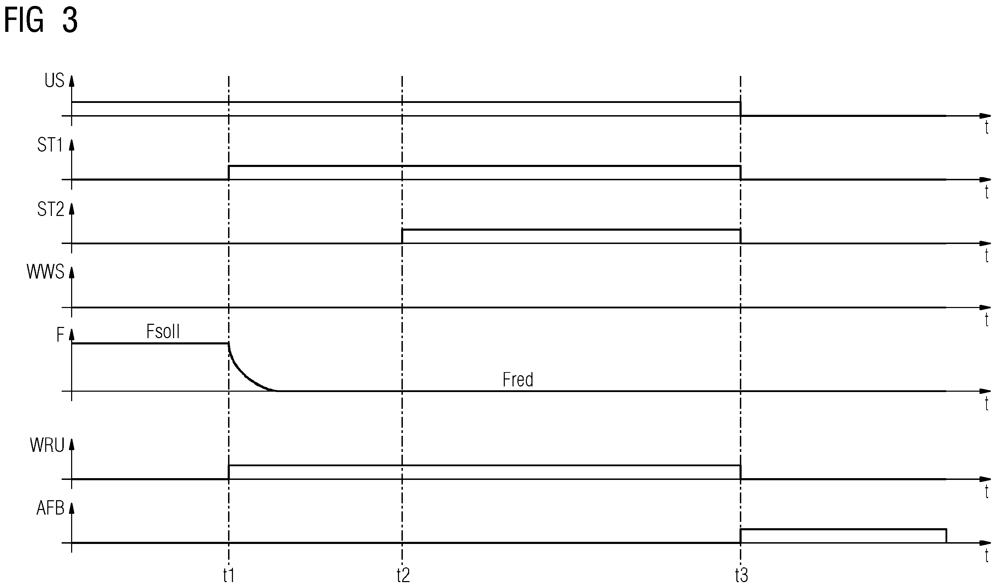

Die Figur 3 zeigt die Zeitverläufe des Überwachungssignals US, des Ankündigungssignals ST1, des Türsteuersignals ST2, der Bremskraft F, der Wegrollüberwachung WRU, des Wegrollwarnsignal WWS und des Anfahrens über der Zeit t für ein zweites beispielhaftes Betriebsszenario.

Bei dem Ausführungsbeispiel gemäß Figur 3 wird davon ausgegangen, dass das Bremssteuermodul 14 den Bremskraftsteuerbefehl, durch den die Reduktion der Bremskraft F beispielsweise auf den reduzierten Bremskraftwert Fred veranlasst wird, ausgibt, sobald das Ankündigungssignal ST1, erzeugt worden ist. Die Reduktion der Bremskraft F beginnt somit früher als bei dem Betriebsszenario gemäß Figur 2 und ist somit auch früher abgeschlossen.

Im Übrigen gelten die obigen Ausführungen im Zusammenhang mit dem ersten Betriebsszenario gemäß Figur 2 für das zweite Betriebsszenario gemäß Figur 3 entsprechend.

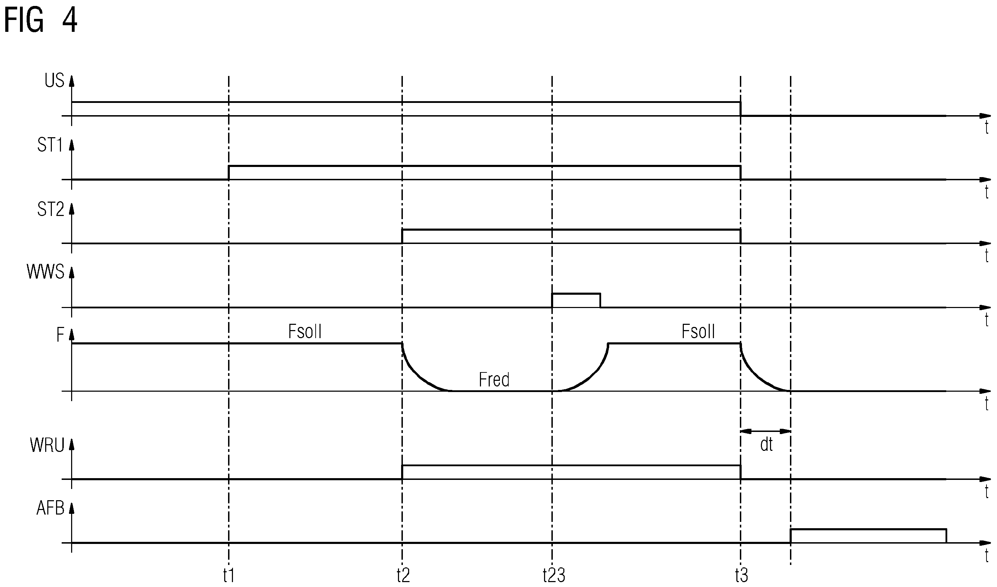

Die Figur 4 zeigt ein drittes beispielhaftes Betriebsszenario, das dem zweiten Betriebsszenario mit dem einzigen Unterschied entspricht, dass zu einem Zeitpunkt t23 das Schienenfahrzeug 1 wegen eines Gefälles zu rollen beginnt. Demgemäß erzeugt das Wegrollüberwachungsmodul 15 ein Wegrollwarnsignal WWS und übermittelt dieses zu dem Bremssteuermodul 14, das in Reaktion darauf die Bremskraft F wieder auf die Sollbremskraft Fsoll erhöht.

Das Bremssteuermodul 14 erhält die wegen des Wegrollens wieder eingestellte Sollbremskraft Fsoll vorzugsweise so lange aufrecht, bis die Bestätigung, dass alle Fahrzeugtüren geschlossen sind, vorliegt (siehe Signalwechsel des Überwachungssignals US) und das Anfahren erfolgen kann. In der Figur 4 ist mit dem Bezugszeichen dt die Anfahrverzögerungszeit bezeichnet, die durch den nötigen Abbau der Bremskraft F vor dem Anfahren hervorgerufen wird.

Das Wegrollüberwachungsmodul 15 hält die Wegrollüberwachung WRU vorzugsweise mindestens so lange aufrecht, bis mit der Umsetzung des Anfahrbefehls AFB begonnen wird und die Bremsen gelöst werden.

Im Übrigen gelten die obigen Ausführungen im Zusammenhang mit dem ersten Betriebsszenario gemäß Figur 2 für das dritte Betriebsszenario gemäß Figur 4 entsprechend.

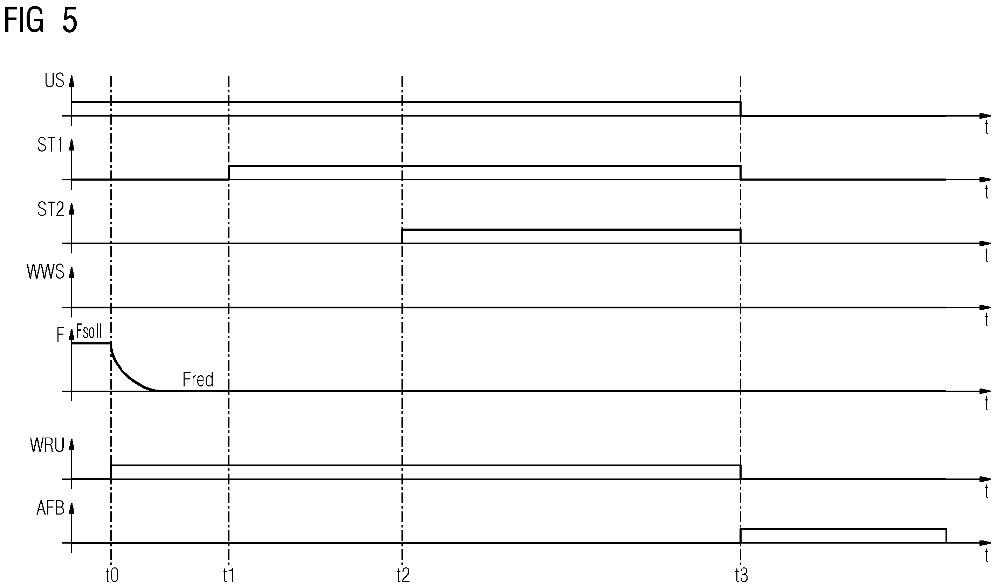

Die Figur 5 zeigt ein viertes beispielhaftes Betriebsszenario, das dem zweiten beispielhaften Betriebsszenario entspricht mit dem einzigen Unterschied, dass das Bremssteuermodul 14 den Bremskraftsteuerbefehl, durch den die Reduktion der Bremskraft F veranlasst wird, erzeugt, bevor das Ankündigungssignal ST1 vorliegt. Demgemäß werden also weder das Ankündigungssignal ST1 noch das Türsteuersignal ST2 zur Triggerung der Bremskraftreduktion herangezogen. Die Reduktion der Bremskraft F beginnt somit noch früher als bei dem Betriebsszenario gemäß Figur 3 und ist somit auch früher abgeschlossen.

Das Bremssteuermodul 14 kann die Reduktion der Bremskraft F veranlassen, wenn es dazu extern aufgefordert wird, beispielsweise von einem Fahrzeugführer oder im Falle eines autark fahrenden Schienenfahrzeugs 1 von einem ATO-Steuersystem, das in Form eines ATO-Moduls ATO ebenfalls in dem Speicher 110 abgespeichert sein kann. Auch kann vorgesehen sein, dass das Bremssteuermodul 14 die Reduktion der Bremskraft F selbsttätig auf der Basis eines vorgegebenen Fahrplans veranlasst, der ebenfalls in dem Speicher 110 abgespeichert sein kann.

Im Übrigen gelten die obigen Ausführungen im Zusammenhang mit dem ersten Betriebsszenario gemäß Figur 2 für das vierte Betriebsszenario gemäß Figur 5 entsprechend.

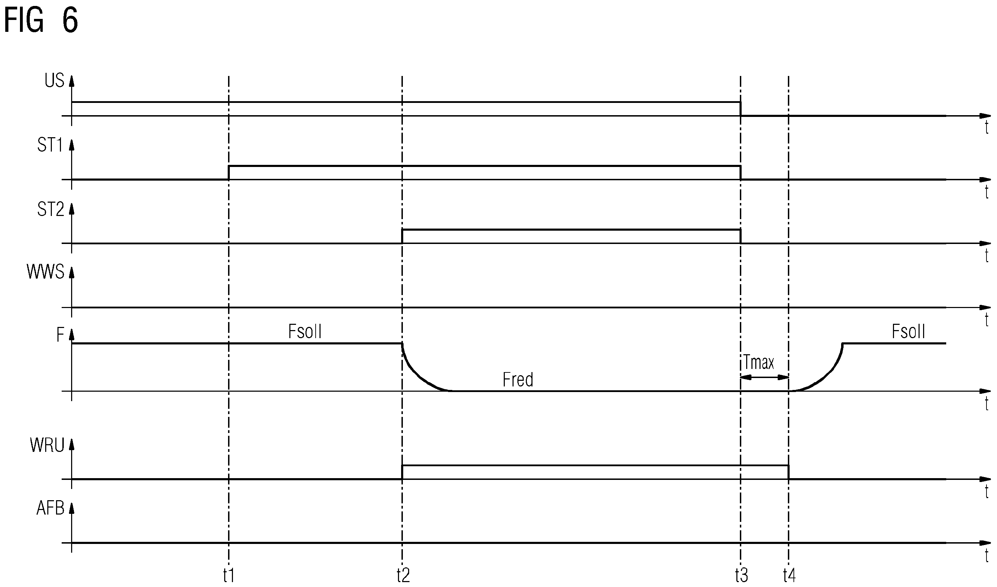

Die Figur 6 zeigt ein fünftes beispielhaftes Betriebsszenario, das dem zweiten beispielhaften Betriebsszenario mit dem einzigen Unterschied entspricht, dass das Bremssteuermodul 14 mit dem Bremskraftsteuerbefehl BF die Reduktion der Bremskraft F rückgängig macht und wieder die Sollbremskraft Fsoll veranlasst, wenn innerhalb einer vorgegebenen Anfahrzeitspanne Tmax nach Vorliegen der Bestätigung, dass alle Fahrzeugtüren geschlossen sind, also nachdem das Überwachungssignal US den Signalwechsel von einer logischen Eins auf eine logische Null vollzogen hat, kein Anfahren erfolgt und kein Anfahrbefehl AFB vorliegt oder umgesetzt wurde.

Im Übrigen gelten die obigen Ausführungen im Zusammenhang mit dem ersten Betriebsszenario gemäß Figur 2 für das fünfte Betriebsszenario gemäß Figur 6 entsprechend.

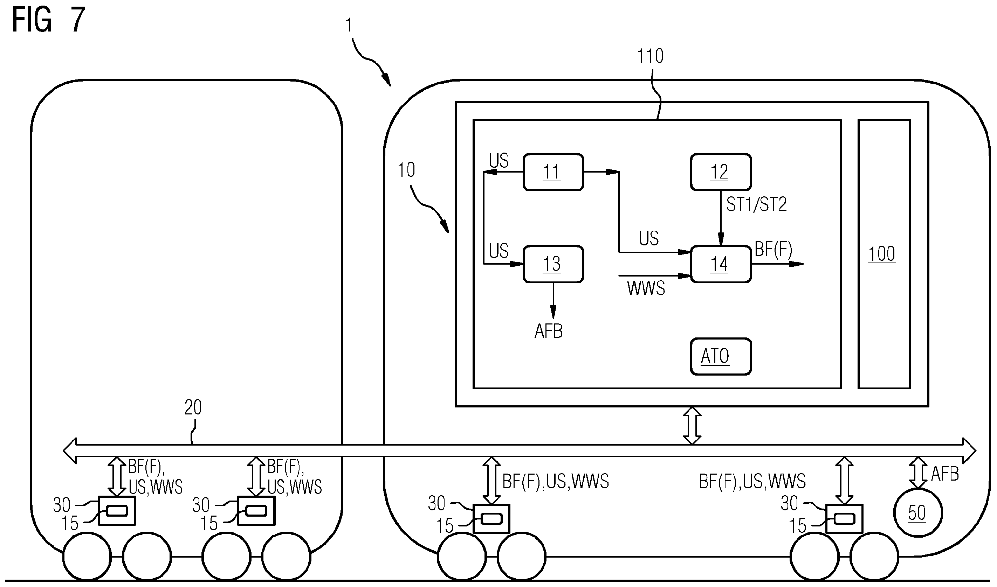

Die Figur 7 zeigt Bestandteile eines Ausführungsbeispiels für ein weiteres erfindungsgemäßes Schienenfahrzeug 1, das mit einem weiteren Ausführungsbespiel für ein erfindungsgemäßes Fahrzeugsteuersystem 10 ausgerüstet ist. Bei dem Ausführungsbeispiel gemäß Figur 7 ist die Wegrollüberwachungseinrichtung durch eine Vielzahl an dezentral angeordneten Wegrollüberwachungsmodulen 15 gebildet, die jeweils in einem zugeordneten Bremssteuergerät 30 vorzugsweise softwaremäßig integriert sind. Jedes der Wegrollüberwachungsmodule 15 kann jeweils das in den Figuren 2 bis 6 gezeigte Wegrollwarnsignal WWS erzeugen, sobald es ein Wegrollen des Schienenfahrzeugs 1 feststellt.

Im Übrigen gelten die obigen Erläuterungen im Zusammenhang mit den Figuren 1 bis 6 für das Ausführungsbeispiel gemäß Figur 7 entsprechend.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden. Der Gegenstand der Erfindung ist durch die angehängten Ansprüche definiert.

Unabhängig vom grammatikalischen Geschlecht eines bestimmten Begriffes sind Personen mit männlicher, weiblicher oder anderer Geschlechteridentität mit umfasst.

### Bezugszeichenliste

- 1: Schienenfahrzeug
- 10: Fahrzeugsteuersystem
- 11: Türüberwachungsmodul
- 12: Türsteuermodul
- 13: Antriebssteuermodul
- 14: Bremssteuermodul
- 15: Wegrollüberwachungsmodul
- 20: Datenbus
- 30: Bremssteuergerät
- 50: Antrieb
- 100: Recheneinrichtung
- 110: Speicher

- AFB: Anfahrbefehl
- ATO: ATO-Modul
- BF: Bremskraftsteuerbefehl
- dT: Anfahrverzögerungszeit
- F: Bremskraft
- Fred: reduzierter Bremskraftwert
- Fsoll: Sollbremskraft
- ST1: Ankündigungssignal
- ST2: Türsteuersignal
- t: Zeit
- t1-t3: Zeitpunkt
- t23: Zeitpunkt
- Tmax: Anfahrzeitspanne
- US: Überwachungssignal
- WRU: Wegrollüberwachung
- WWS: Wegrollwarnsignal

## Patentansprüche

1. Verfahren zum Betreiben eines Schienenfahrzeugs (1), wobei bei dem Verfahren
- im Falle eines Fahrzeughalts, bei dem zumindest eine Fahrzeugtür geöffnet worden ist, das Schienenfahrzeug (1) mit einer vorgegebenen Sollbremskraft (Fsoll) gebremst wird,
- vor einem Wiederanfahren des Schienenfahrzeugs (1) ein Türschließsignal (ST1, ST2) erzeugt wird, das ein Schließen aller geöffneten Fahrzeugtüren auslöst oder ein bevorstehendes Schließen ankündigt,
- das vollständige Schließen der Fahrzeugtüren überwacht wird und
- das Wiederanfahren frühestens nach dem Vorliegen einer Bestätigung, dass alle Fahrzeugtüren geschlossen sind, erfolgt,
**dadurch gekennzeichnet, dass**
- vor, bei oder nach Erzeugung des Türschließsignals (ST1, ST2) und noch vor Vorliegen der Bestätigung, dass alle Fahrzeugtüren geschlossen sind, die auf das Schienenfahrzeug (1) wirkende Bremskraft (F) reduziert wird,
- vor oder spätestens bei der Reduktion der Bremskraft (F) eine Wegrollüberwachung (WRU) begonnen wird, und
- während aktivierter Wegrollüberwachung (WRU) die Bremskraft (F) wieder auf die Sollbremskraft (Fsoll) erhöht wird, falls die Wegrollüberwachung (WRU) ein Wegrollen des Schienenfahrzeugs (1) feststellt, und andernfalls die reduzierte Bremskraft (F) beibehalten wird, wobei die Wegrollüberwachung (WRU) zumindest so lange durchgeführt wird, bis die Bestätigung, dass alle Fahrzeugtüren geschlossen sind, vorliegt.

2. Verfahren nach Anspruch 1,
**dadurch gekennzeichnet, dass**
das Türschließsignal ein Ankündigungssignal (ST1) ist, das eine bevorstehende Türschließung ankündigt.

3. Verfahren nach Anspruch 1,
**dadurch gekennzeichnet, dass**
das Türschließsignal ein Türsteuersignal (ST2) ist, das eine mechanische Türschließung auslöst.

4. Verfahren nach einem der voranstehenden Ansprüche,
**dadurch gekennzeichnet, dass**
die Wegrollüberwachung (WRU) eine Überwachung der Raddrehzahl zumindest eines der Räder des Schienenfahrzeugs (1) einschließt.

5. Verfahren nach einem der voranstehenden Ansprüche,
**dadurch gekennzeichnet, dass**
die reduzierte Bremskraft (F) oder die wieder auf die Sollbremskraft (Fsoll) erhöhte Bremskraft (F) beibehalten wird, bis das Anfahren erfolgt.

6. Verfahren nach einem der voranstehenden Ansprüche,
**dadurch gekennzeichnet, dass**
die Wegrollüberwachung (WRU) erst beendet wird, wenn das Anfahren erfolgt.

7. Verfahren nach einem der voranstehenden Ansprüche,
**dadurch gekennzeichnet, dass**
die Bremskraft (F) wieder auf die Sollbremskraft (Fsoll) erhöht wird, wenn innerhalb einer vorgegebenen Anfahrzeitspanne (Tmax) nach Vorliegen der Bestätigung, dass alle Fahrzeugtüren geschlossen sind, kein Anfahren erfolgt.

8. Verfahren nach einem der voranstehenden Ansprüche,
**dadurch gekennzeichnet, dass**
die Reduktion der Bremskraft (F) auf eine Bremskraft (F) von Null erfolgt.

9. Verfahren nach einem der voranstehenden Ansprüche 1 bis 7,
**dadurch gekennzeichnet, dass**
die Reduktion der Bremskraft (F) vom Gefälle an der Haltestelle abhängig gewählt wird, wobei die Reduktion der Bremskraft (F) umso kleiner gewählt wird, je größer das Gefälle an der Haltestelle ist.

10. Verfahren nach einem der voranstehenden Ansprüche,
**dadurch gekennzeichnet, dass**
ein Anfahrbefehl (AFB) bei Vorliegen der Bestätigung, dass alle Fahrzeugtüren geschlossen sind, automatisch erzeugt wird.

11. Fahrzeugsteuersystem (10) für ein Schienenfahrzeug (1) mit
- einer Bremssteuereinrichtung (14), die dazu ausgestaltet ist, im Falle eines Fahrzeughalts, bei dem zumindest eine Fahrzeugtür geöffnet ist, ein Bremsen des Schienenfahrzeugs (1) mit einer vorgegebenen Sollbremskraft (Fsoll) zu veranlassen,
- einer Türsteuereinrichtung (12), die ausgestaltet ist, vor einem Wiederanfahren des Schienenfahrzeugs (1) nach dem Fahrzeughalt ein Türschließsignal (ST1, ST2) zu erzeugen, das ein Schließen aller geöffneten Fahrzeugtüren auslöst oder ein bevorstehendes Schließen ankündigt,
- einer Türüberwachungseinrichtung (11), die ausgestaltet ist, das vollständige Schließen der Fahrzeugtüren zu überwachen, und
- einer Antriebssteuereinrichtung (13), die ausgestaltet ist, einen das Wiederanfahren auslösenden Anfahrbefehl (AFB) frühestens nach dem Vorliegen einer Bestätigung, dass alle Fahrzeugtüren geschlossen sind, zu erzeugen oder umzusetzen,
**dadurch gekennzeichnet, dass**
- die Bremssteuereinrichtung (14) außerdem dazu ausgestaltet ist, vor, bei oder nach einer Erzeugung des Türschließsignals (ST1, ST2) und noch vor Vorliegen der Bestätigung, dass alle Fahrzeugtüren geschlossen sind, die auf das Schienenfahrzeug (1) wirkende Bremskraft (F) zu reduzieren,
- eine Wegrollüberwachungseinrichtung (15) vorhanden ist, die vor oder spätestens zeitgleich mit der Reduktion der Bremskraft (F) eine Wegrollüberwachung (WRU) beginnt, die sie zumindest so lange durchführt, bis die Bestätigung, dass alle Fahrzeugtüren geschlossen sind, vorliegt, und
- die Bremssteuereinrichtung (14) außerdem dazu ausgestaltet ist, während aktivierter Wegrollüberwachung (WRU) die Bremskraft (F) wieder auf die Sollbremskraft (Fsoll) zu erhöhen, falls die Wegrollüberwachungseinrichtung (15) ein Wegrollen des Schienenfahrzeugs (1) feststellt, und andernfalls die reduzierte Bremskraft (F) beizubehalten.

12. Fahrzeugsteuersystem (10) nach Anspruch 11,
**dadurch gekennzeichnet, dass**
- die Wegrollüberwachungseinrichtung zwei oder mehr Wegrollüberwachungsmodule (15) umfasst,
- das Fahrzeugsteuersystem (10) zwei oder mehr Bremssteuergeräte (30) umfasst, und
- in jedem der Bremssteuergeräte (30) jeweils eines der Wegrollüberwachungsmodule der Wegrollüberwachungseinrichtung (15) integriert ist.

13. Fahrzeugsteuersystem (10) nach Anspruch 12,
**dadurch gekennzeichnet, dass** die Wegrollüberwachungseinrichtung (15) auf ein Wegrollen schließt, wenn zumindest eines der Wegrollüberwachungsmodule (15) ein Wegrollen signalisiert.

14. Fahrzeugsteuersystem (10) nach einem der voranstehenden Ansprüche 11-13,
**dadurch gekennzeichnet, dass**
die Bremssteuereinrichtung (14) und/oder die Türsteuereinrichtung (12) und/oder die Überwachungseinrichtung und/oder die Antriebssteuereinrichtung (13) und/oder die Wegrollüberwachungseinrichtung (15) bzw. deren Wegrollüberwachungsmodule jeweils durch ein oder mehr Softwaremodule gebildet sind.

## Claims

1. Method for operating a rail vehicle (1), wherein in the method
- in the case of a vehicle stop, in which at least one vehicle door has been opened, the rail vehicle (1) is braked with a predetermined target brake force (Ftarg),
- before restarting the rail vehicle (1), a door closing signal (ST1, ST2) is generated, which triggers a closure of all opened vehicle doors or announces an imminent closure,
- the complete closure of the vehicle doors is supervised,
and
- the restart takes place at the earliest following confirmation that all vehicle doors are closed,
**characterised in that**
- before, during or after generation of the door closing signal (ST1, ST2) and even before confirmation that all vehicle doors are closed, the brake force (F) acting on the rail vehicle (1) is reduced,
- before or at the latest during the reduction in the brake force (F), a roll-away supervision (WRU) is begun, and
- during activated roll-away supervision (WRU), the brake force (F) is again raised to the target brake force (Ftarg) if the roll-away supervision (WRU) establishes a rolling away of the rail vehicle (1) and on the other hand the reduced brake force (F) is retained, wherein the roll-away supervision (WRU) is carried out at least until confirmation that all vehicle doors are closed.

2. Method according to claim 1,
**characterised in that**
the door closing signal is an announcement signal (ST1) which announces an imminent door closure.

3. Method according to claim 1,
**characterised in that**
the door closing signal is a door control signal (ST2), which triggers a mechanical door closure.

4. Method according to one of the preceding claims,
**characterised in that**
the roll-away supervision (WRU) includes supervision of the wheel speed of at least one of the wheels of the rail vehicle (1).

5. Method according to one of the preceding claims,
**characterised in that**
the reduced brake force (F) or the brake force (F) increased again to the target brake force (Ftarg) is retained until the start-up occurs.

6. Method according to one of the preceding claims,
**characterised in that**
the roll-away supervision (WRU) is only terminated when the start-up occurs.

7. Method according to one of the preceding claims,
**characterised in that**
the brake force (F) is increased again to the target brake force (Ftarg), if no start-up occurs within a predetermined start-up time period (Tmax) following confirmation that all vehicle doors are closed.

8. Method according to one of the preceding claims,
**characterised in that**
the brake force (F) is reduced to a brake force (F) of zero.

9. Method according to one of the preceding claims 1 to 7,
**characterised in that**
the reduction in the brake force (F) is selected as a function of the gradient at the station, wherein the reduction in the brake force (F) is selected to be smaller, the greater the gradient at the station.

10. Method according to one of the preceding claims,
**characterised in that**
a start-up command (AFB) is automatically generated if there is confirmation that all vehicle doors are closed.

11. Vehicle control system (10) for a rail vehicle (1) with
- a brake control facility (14), which, in the case of a vehicle stop, in which at least one vehicle door is opened, is configured to trigger a braking of the rail vehicle (1) with a predetermined target brake force (Ftarg),
- a door control facility (12), which, before a restart of the rail vehicle (1) after the vehicle stop, is configured to generate a door closing signal (ST1, ST2) which triggers a closure of all opened vehicle doors or announces an imminent closure,
- a door supervision facility (11), which is configured to supervise the complete closure of the vehicle doors, and
- a drive control facility (13), which is configured to generate or implement a start-up command (AFB) triggering the restart at the earliest after confirmation that all vehicle doors are closed,
**characterised in that**
- the brake control facility (14) is moreover configured to reduce the brake force (F) acting on the rail vehicle (1) before, during or after generating the door closing signal (ST1, ST2) and even before confirmation that all vehicle doors are closed,
- a roll-away supervision facility (15) exists, which begins a roll-away supervision (WRU) before or at the latest at the same time as the reduction of the brake force (F), which is carried out at least until confirmation that all vehicle doors are closed, and
- the brake control facility (14) is moreover configured, during activated roll-away supervision (WRU), to increase the brake force (F) back to the target brake force (Ftarg) if the roll-away supervision facility (15) establishes a rolling-away of the rail vehicle (1) and on the other hand to retain the reduced brake force (F).

12. Vehicle control system (10) according to claim 11, **characterised in that**
- the roll-away supervision facility comprises two or more roll-away supervision modules (15),
- the vehicle control system (10) comprises two or more brake control devices (30), and
- one of the roll-away supervision modules of the roll-away supervision facility (15) is integrated into each of the brake control devices (30) in each case.

13. Vehicle control system (10) according to claim 12,
**characterised in that**
the roll-away supervision facility (15) concludes a rolling-away when at least one of the roll-away supervision modules (15) signals a rolling-away.

14. Vehicle control system (10) according to one of the preceding claims 11 - 13,
**characterised in that**
the brake control facility (14) and/or the door control facility (12) and/or the supervision facility and/or the drive control facility (13) and/or the roll-away supervision facility (15) or the roll-away supervision modules are therefore formed in each case by one or more software modules.

## Revendications

1. Procédé pour faire fonctionner un véhicule (1) ferroviaire, dans lequel, dans le procédé
- dans le cas d'un arrêt du véhicule, dans lequel au moins une porte du véhicule a été ouverte, on freine le véhicule (1) ferroviaire par une force (Fsoll) de freinage de consigne donnée à l'avance,
- avant un redémarrage du véhicule (1) ferroviaire, on produit un signal (ST1, ST2) de fermeture de porte, qui déclenche une fermeture de toutes les portes ouvertes du véhicule ou qui indique une fermeture imminente,
- on contrôle la fermeture complète des portes du véhicule et
- le redémarrage s'effectue au plus tôt après une confirmation que toutes les portes du véhicule sont fermées,
**caractérisé en ce que**,
- avant, pendant ou après la production du signal (ST1, ST2) de fermeture de porte et encore avant que la confirmation soit donnée que toutes les portes du véhicule sont fermées, on réduit la force (F) de freinage s'appliquant au véhicule (1) ferroviaire,
- avant ou au plus tard lors de la réduction de la force (F) de freinage, on fait commencer un contrôle (WRU) de dérive, et
- pendant que le contrôle (WRU) de dérive est activé, on réaugmente la force (F) de freinage à la force (Fsoll) de freinage de consigne, si le contrôle (WRU) de dérive constate une dérive du véhicule (1) ferroviaire, et sinon on conserve la force (F) de freinage réduite, dans lequel on effectue le contrôle (WRU) de dérive au moins jusqu'à que soit donnée la confirmation que toutes les portes du véhicule sont fermées.

2. Procédé suivant la revendication 1,
**caractérisé en ce que**
le signal de fermeture de porte est un signal (ST1) d'indication, qui indique une fermeture imminente de porte.

3. Procédé suivant la revendication 1,
**caractérisé en ce que**
le signal de fermeture de porte est un signal (ST2) de commande de porte, qui déclenche une fermeture mécanique de porte.

4. Procédé suivant l'une des revendications précédentes,
**caractérisé en ce que**
le contrôle (WRU) de dérive inclut un contrôle du nombre de rotations d'au moins l'une des roues du véhicule (1) ferroviaire.

5. Procédé suivant l'une des revendications précédentes,
**caractérisé en ce que**
l'on conserve la force (F) de freinage réduite ou la force (F) de freinage réaugmentée à la force (Fsoll) de freinage de consigne, jusqu'à ce que le démarrage s'effectue.

6. Procédé suivant l'une des revendications précédentes,
**caractérisé en ce que**
l'on ne met fin au contrôle (WRU) de dérive que lorsque le démarrage s'effectue.

7. Procédé suivant l'une des revendications précédentes,
**caractérisé en ce que**
l'on réaugmente la force (F) de freinage à la force (Fsoll) de freinage de consigne, si dans un laps (Tmax) de temps de démarrage donné à l'avance, après qu'est donnée la confirmation que toutes les portes du véhicule sont fermées, un démarrage n'a pas eu lieu.

8. Procédé suivant l'une des revendications précédentes,
**caractérisé en ce que**
la réduction de la force (F) de freinage s'effectue jusqu'à une force (F) de freinage de zéro.

9. Procédé suivant l'une des revendications 1 à 7 précédente,
**caractérisé en ce que**
l'on choisit la réduction de la force (F) de freinage en fonction de la dénivellation au point d'arrêt, dans lequel on choisit la réduction de la force (F) de freinage d'autant plus petite que la dénivellation au point d'arrêt est plus grande.

10. Procédé suivant l'une des revendications précédentes,
**caractérisé en ce que**
l'on produit automatiquement une instruction (AFB) de démarrage, lorsqu'est donnée la confirmation que toutes les portes du véhicule sont fermées.

11. Système (10) de commande de véhicule pour un véhicule (1) ferroviaire, comprenant
- un dispositif (14) de commande de freinage, qui est conformé pour, dans le cas d'un arrêt du véhicule dans lequel au moins une porte du véhicule est ouverte, provoquer un freinage du véhicule (1) ferroviaire par une force (Fsoll) de freinage de consigne donné à l'avance,
- un dispositif (12) de commande de porte, qui est conformé pour, avant un redémarrage du véhicule (1) ferroviaire, après l'arrêt du véhicule, produire un signal (ST1, ST2) de fermeture de porte, qui déclenche une fermeture de toutes les portes ouvertes du véhicule ou indique une fermeture imminente,
- un dispositif (11) de contrôle de porte, qui est conformé pour contrôler la fermeture complète des portes du véhicule, et
- un dispositif (13) de commande d'entraînement, qui est conformé pour produire ou mettre en oeuvre une instruction (AFB) de démarrage déclenchant le redémarrage au plus tôt après qu'a été donnée une confirmation que toutes les portes du véhicule sont fermées,
**caractérisé en ce que**
- le dispositif (14) de commande de freinage est constitué en outre pour, avant, pendant ou après une production du signal (ST1, ST2) de fermeture de porte et encore avant que soit donnée la confirmation que toutes les portes du véhicule sont fermées, réduire la force (F) de freinage s'appliquant au véhicule (1) ferroviaire,
- il y a un dispositif (15) de contrôle de dérive, qui fait commencer un contrôle (WRU) de dérive, avant ou au plus tard en même temps que la réduction de la force (F) de freinage et qui s'effectue au moins jusqu'à ce qu'est donnée la confirmation que toutes les portes du véhicule sont fermées, et
- le dispositif (14) de commande de freinage est conformé en outre pour, pendant que le contrôle (WRU) de dérive est activé, réaugmenter la force (F) de freinage à la valeur (Fsoll) de freinage de consigne, si le dispositif (15) de contrôle de dérive constate une dérive du véhicule (1) ferroviaire et sinon conserver la force (F) réduite de freinage.

12. Système (10) de commande de véhicule suivant la revendication 11,
**caractérisé en ce que**
- le dispositif de contrôle de dérive comprend deux ou plusieurs modules (15) de contrôle de dérive,
- le système (10) de commande de véhicule comprend deux ou plusieurs appareils (30) de commande de freinage, et
- il est intégré, dans chacun des appareils (30) de commande de freinage, respectivement l'un des modules de contrôle de dérive du dispositif (15) de contrôle de dérive.

13. Système (10) de commande de véhicule suivant la revendication 12,
**caractérisé en ce que**
le dispositif (15) de contrôle de dérive déduit une dérive, si au moins l'un des modules (15) de contrôle de dérive signale une dérive.

14. Système (10) de commande de véhicule suivant l'une des revendications 11 à 13 précédente,
**caractérisé en ce que**
le dispositif (14) de commande de freinage et/ou le dispositif (12) de commande de porte et/ou le dispositif de contrôle et/ou le dispositif (13) de commande d'entraînement et/ou le dispositif (15) de contrôle de dérive ou ses modules de contrôle de dérive sont formés chacun par un ou par plusieurs modules logiciels.
